# EUROPÄISCHE PATENTANMELDUNG

(11) **EP 1 184 212 A2**
(43) Veröffentlichungstag der Anmeldung: **06.03.2002**
(21) Anmeldenummer: 01119283.8
(22) Anmeldetag: 10.08.2001
(51) Int. Cl.: B60D 1/52

(54) **Anhängekupplung**

(30) Priorität: 02.09.2000 DE 10043339
(71) Anmelder: MVG METALLVERARBEITUNGSGESELLSCHAFT mbH, D-52249 Eschweiler (DE)
(72) Erfinder: Niessen, Manfred, Dipl.-Ing., 52224 Stolberg (DE); Horst, Hans Dieter, Prof. Dr.-Ing., 52249 Eschweiler (DE)
(74) Vertreter: Bauer, Dirk, Dipl.-Ing. Dipl.-Kfm.

(57) **Zusammenfassung**

Eine Anhängekupplung weist ein an einen Fahrzeugträger angeschlossenes Gehäuse (15) und eine darin durch eine Öffnung (16) einsteckbare und in einer koaxialen Position zu dem Gehäuse (15) verriegelbare Kugelstange (1) auf. Die Öffnung (16) und der Innenraum (17) des Gehäuses (15) in einem von der Öffnung (16) ausgehenden Abschnitt weisen größere Querschnitte auf als die entsprechenden Querschnitte der Kugelstange (1). An dem Außenmantel (15') der Kugelstange (1) und/oder an dem Innenmantel (19) des Gehäuses (15) ist mindestens ein radial vorstehendes Verriegelungselement angeordnet, wodurch die Kugelstange (1) in das und aus dem Gehäuse (15) nur dann ein- und ausführbar ist, wenn die Mittelachse (9) der Kugelstange (1) und die Mittelachse des Innenraums (17) des Gehäuses (15) sich schneiden. Des weiteren ist die in das Gehäuse (15) eingeführte Kugelstange (1) koaxial zum Innenraum (17) des Gehäuses (15) ausrichtbar, wobei das Verriegelungselement in mindestens einer Aussparung (21) in dem Außenmantel (15') der Kugelstange (1) oder im Innenmantel (19) des Gehäuses überführbar ist. Ein durch die koaxiale Ausrichtung der Kugelstange (1) zu dem Innenraum (17) des Gehäuses (15) in diesem erzeugbarer Ringraum, der sich in einem von der Öffnung (16) ausgehenden Abschnitt des Innenraums (17) erstreckt, ist durch eine auf der Kugelstange (1) verschiebbar gelagerte Hülse (24) ausfüllbar. Um eine auch bei Verschleiß an den Kontaktflächen möglichst spielfreie Fixierung der Kugelstange (1) in dem Gehäuse (15) zu erreichen, wird vorgeschlagen, daß ein Stützbereich (3) am gehäuseseitigen Ende des Außenmantels (15') der Kugelstange (1) die Form eines konvexen Kugelausschnitts und ein damit korrespondierender Aufnahmebereich (18) an dem Innenmantel (19) des Gehäuses (15) die Form eines entsprechenden konkaven Kugelausschnitts aufweist und daß das Verriegelungselement eine rampenförmige Kontaktfläche (23) besitzt, die in der Verriegelungsstellung an einer entsprechend rampenförmigen Anlagefläche (22) an der Aussparung (21) in dem Innenmantel (19) des Gehäuses (15) und/oder in dem Außenmantel (15') der Kugelstange (1) anliegt.

## Beschreibung

Die Erfindung betrifft eine Anhängekupplung mit einem an einem Fahrzeugträger angeschlossenen Gehäuse und einer darin durch eine Öffnung einsteckbaren und in einer im wesentlichen koaxialen Position zu dem Gehäuse verriegelbaren Kugelstange. Die Öffnung und der Innenraum des Gehäuses weisen in einem von der Öffnung ausgehenden Abschnitt größere Querschnitte auf als die entsprechenden Querschnitte der Kugelstange. An dem Außenmantel der Kugelstange und/ oder an dem Innenmantel des Gehäuses ist mindestens ein radial vorstehendes Verriegelungselement angeordnet, wodurch die Kugelstange in das und aus dem Gehäuse nur dann ein- und ausführbar ist, wenn die Mittelachse der Kugelstange und die Mittelachse des Innenraums des Gehäuses sich schneiden.

Die in das Gehäuse eingeführte Kugelstange ist koaxial zum Innenraum des Gehäuses ausrichtbar, wobei das Verriegelungselement in mindestens eine Aussparung im Außenmantel der Kugelstange und/ oder im Innenmantel des Gehäuses überführbar und damit in axiale Richtung relativ zu dem Gehäuse festlegbar ist. Des weiteren ist ein durch die koaxiale Ausrichtung der Kugelstange zu der Öffnung in dem Gehäuse erzeugbarer Ringraum, der sich in einem von der Öffnung ausgehenden Abschnitt des Innenraums erstreckt, durch eine auf der Kugelstange verschiebbar gelagerte Hülse ausfüllbar.

Eine derartige Anhängekupplung ist beispielsweise aus der EP 0 593 983 A1 bekannt. Bei der bekannten Vorrichtung verjüngt sich der Innenraum in dem Gehäuse mit zunehmender Entfernung von dessen Öffnung. Das in das Gehäuse einschiebbare Ende der Kugelstange ist knochenartig verdickt und in seinem Durchmesser so bemessen, daß seine Mantelfläche in der Verriegelungsposition der Kugelstange spielfrei an der inneren Mantelfläche des Gehäuses anliegt. Das Verriegelungselement ist in Form eines über die äußere Mantelfläche der Kugelstange vorstehenden Zapfens ausgeführt, der bajonettverschlußartig in eine winkelförmige, das heißt, zunächst horizontal und sodann vertikal verlaufende Nut einführbar ist. Der vertikale Abschnitt der Winkelnut endet halbkreisförmig und ist im Durchmesser an den Durchmesser des Zapfens angepaßt. Die bei einer axialen Zugbelastung der Kugelstange die axialen Kräfte übertragende Stützfläche besitzt somit die Form eines Viertels eines Zylinders.

Die Hülse ist mit Hilfe einer Schraubenfeder, die sich zwischen der Hülse und der Kugelstange befindet, in Richtung auf den Innenraum des Gehäuses vorgespannt und verhindert somit, daß die Kugelstange die koaxiale Verriegelungsposition verläßt.

Auch wenn sich die Anhängekupplung der vorbeschriebenen Art im Großen und Ganzen gut bewährt hat, ist ein gewisser Nachteil darin zu sehen, daß im Falle eines Verschleißes sowohl des Gehäuses als auch des knochenartigen Endstücks der Kugelstange, sowie ebenfalls bei einem Verschleiß im Bereich der viertel-zylindrischen Tragfläche an dem Verriegelungszapfen eine spielfreie Fixierung der Kugelstange nicht mehr gegeben ist. Vielmehr kann sich die Kugelstange sowohl in rein axiale Richtung bewegen als auch Schwenkbewegungen ausführen. Eine derartige Beweglichkeit der Kugelstange verursacht einerseits bei Lastwechseln, wie sie im Fahrbetrieb unvermeidlich sind, unangenehme Klappergeräusche und vermittelt andererseits dem Benutzer das ungute Gefühl einer scheinbar unzureichenden Fixierung.

Außerdem ist es als nachteilig anzusehen, daß die mittels Federkraft in die Gehäuseöffnung vorgespannte Hülse nur mit erheblichem Kraftaufwand von der Sperrposition in die Entnahmeposition überführbar ist. Hier wäre eine Betätigung mit geringerem Krafteinsatz wünschenswert.

Der Erfindung liegt die Aufgabe zugrunde, eine Anhängekupplung vorzuschlagen, bei der die Kugelstange auch nach längerer Betriebszeit und bei gewissem Materialverschleiß an den tragenden Flächen möglichst spielfrei fixiert ist.

Ausgehend von einer Anhängekupplung der eingangs beschriebenen Art wird diese Aufgabe erfindungsgemäß dadurch gelöst, daß ein Stützbereich am gehäuseseitigen Ende des Außenmantels der Kugelstange die Form eines konvexen Kugelausschnitts und ein damit korrespondierender Aufnahmebereich an den Innenmantel des Gehäuses die Form eines entsprechenden konkaven Kugelausschnitts aufweist und daß das Verriegelungselement eine rampenförmige Kontaktfläche besitzt, die in der Verriegelungsstellung an einer entsprechend rampenförmigen Anlagefläche an der Aussparung in der inneren Mantelfläche des Gehäuses und/ oder in der äußeren Mantelfläche der Kugelstange anliegt.

Bei der erfindungsgemäßen Anhängekupplung werden aufgrund der kugelförmigen Kontaktflächen sowohl axiale als auch radiale Kräfte am Ende der Kugelstange sicher und großflächig übertragen. Während bei der vorbekannten Kupplung sowohl axiale Zug- als auch Druckkräfte über den Verbindungszapfen und die im Querschnitt halbkreisförmige Aussparung in dem Gehäuse übertragen werden, werden bei der Anhängekupplung nach der Erfindung lediglich axiale Zugkräfte über die rampenförmige Kontakt- bzw. Anlagefläche im Bereich des Verriegelungselements übertragen, wohingegen axiale Druckkräfte von den kugelförmigen Flächenabschnitten am Ende der Kugelstange aufgenommen werden.

Aufgrund des Zusammenwirkens der endseitigen Anlage der kugelförmigen Stützflächen mit den rampenförmigen Kontaktflächen im Bereich des Verriegelungselements, kann eine verschleißbedingte Verkürzung der Kugelstange in axiale Richtung bzw. eine verschleißbedingte Verlängerung der wirksamen Gehäusetiefe dadurch kompensiert werden, daß die rampenförmigen Kontaktflächen um eine gewisses Maß aufeinander gleiten, wodurch es zu einer Verlagerung der Kugelstange in das Gehäuse hinein, das heißt, wiederum zu einer sicheren Anlage im hinteren Bereich der kugelförmigen Anlageflächen kommt.

Um ein besonders gutes Tragverhalten der erfindungsgemäßen Kupplung zu erreichen, wird vorgeschlagen, daß die Hülse, ausgehend von ihrem in die Öffnung des Gehäuses einschiebbaren Ende, zunächst mit einem zylindrischen Mantelabschnitt und daran anschließend mit einem sich im Durchmesser erweiternden konischen Mantelabschnitt versehen ist, wobei der konische Mantelabschnitt mit einem sich von der Ebene der Öffnung erstreckenden, angepaßt konischen Mantelabschnitt des Gehäuses in Kontakt steht. Unter der Wirkung einer Federkraft, die bestrebt ist, die Hülse in die Öffnung hineinzubewegen, ist aufgrund der Konizität der Kontaktflächen stets für eine sichere Anlage der Hülse an der Gehäusewandung gesorgt.

Des weiteren ist es vorteilhaft, wenn die Hülse mittels eines in der Kugelstange drehbar gelagerten Handrades verschiebbar ist, wobei das Handrad oder die Hülse mit einem radial vorstehenden Mitnehmer versehen ist, der in einer Aussparung in der Hülse oder in dem Handrad eingreift und mit einer Wandung der Aussparung in Kontakt bringbar ist.

Insbesondere bei größeren Federkräften, gegen die die Hülse aus der Gehäuseöffnung herausbewegt werden muß, läßt sich mit Hilfe eines Handrades und der damit erzielbaren Übersetzung der Kraftaufwand beim Entfernen der Kugelstange erheblich reduzieren. Das Handrad läßt sich ergonomisch gestalten und daher sehr viel angenehmer betätigen als dies beim direkten Umgreifen und axialen Herausziehen der Hülse der Fall ist.

Um das Handrad im Bereich der Hülse selbst lagern zu können, ist vorgesehen, die Hülse mit einem Langloch zu versehen, durch das die Achse des Handrades geführt ist. Die Länge des Langlochs ist an die maximale Verschiebung der Hülse angepaßt.

Um ein unbeabsichtigtes bzw. selbsttätig ausgelöstes Verstellen des Handrades auszuschließen, wird erfindungsgemäß vorgeschlagen, daß das Handrad nur in einer in Richtung seiner Drehachse von der Kugelstange abgezogenen Stellung drehbar ist, wohingegen das Handrad in einer Ruheposition mittels Federkraft in eine Sicherungsstellung an die Kugelstange bzw. an die Hülse herangezogen ist.

Vorzugsweise greift der an dem Handrad befestigte Mitnehmer in einer Sicherungsstellung des Handrades in eine angepaßte Sicherungsbohrung in der Kugelstange bzw. in einem darauf fest montierten Ring ein. In diesem Fall besteht eine formflüssige Verbindung zur Sicherung des Handrades.

Die Erfindung weiter ausgestaltend wird vorgeschlagen, daß das Handrad mittels einer an seiner Achse eingreifenden Feder in Richtung auf die Sicherungsstellung vorgespannt ist.

Um den Bedienungskomfort zu steigern und ein Rückschieben der Hülse bei der Montage der Kugelstange zu vermeiden, wird vorgeschlagen, daß die Hülse in ihrer Entriegelungsstellung mittels einer Sperrvorrichtung arretierbar ist, die eine selbsttätige Entarretierung bewirkt, sobald die Kugelstange vollständig in axiale Richtung in das Gehäuse eingesteckt ist.

Gemäß einer bevorzugten Ausführungsform weist die Sperrvorrichtung eine in axiale Richtung der Kugelstange verschiebbare Stößelstange und ein daran gekoppeltes Umlenkglied auf, das die axiale Bewegung der Stößelstange in eine radiale Bewegung eines mit dem Umlenkglied gekoppelten Sperrglieds für die Hülse umwandelt, wobei die Stößelstange mittels einer Feder in die Sperrstellung vorgespannt ist und von einem Auslöseelement in dem Gehäuse in die Entriegelungsstellung überführbar ist. Während die Arretierung der Hülse in der Entriegelungsstellung somit automatisch in der ersten Phase der Entfernung der Kugelstange erfolgt, nämlich bei hinreichend weiter axialer Verschiebung der Hülse, kommt es beim umgekehrten Vorgang des Wiedereinsetzens der Kugelstange erst in dem Moment wieder zu einer Entarretierung, wo das Auslöseelement im Gehäuse kurz vor Erreichen der axialen Endstellung der Kugelstange eine Verschiebung der Stößelstange entgegen der Federkraft bewirkt.

Schließlich ist nach der Erfindung noch vorgesehen, daß das Umlenkglied ein Stößel ist, dessen geneigt verlaufende Steuerfläche das stiftförmige Sperrglied abstützt, das in der Entriegelungsstellung in eine Nut in der inneren Mantelfläche der Hülse eingreift.

Die Erfindung wird nachfolgend anhand eines Ausführungsbeispiels, daß in der Zeichnung dargestellt ist, näher erläutert. Es zeigt:
- Fig. 1: eine Kugelstange;
- Fig 2a bis 2c: einen Verriegelungsbolzen für die Kugelstange gemäß Figur 1;
- Fig. 3a bis 3c: einen Ring zur Abstützung einer Feder für die Kugelstange gemäß Figur 1;
- Fig. 4a und 4b: ein Gehäuse im Längsschnitt und in einer Vorderansicht;
- Fig. 5a und 5b: eine Hülse in der Seitenansicht und Vorderansicht;
- Fig. 6: die in das Gehäuse eingesetzte Kugelstange in Verriegelungsstellung mit eingeschobener Hülse;

- Fig. 7a bis 7d: den Vorgang des Zurückschiebens der Hülse mittels Handradbetätigung;
- Fig. 8a und 8b: ein in der Kugelstange gelagertes Handrad in Sicherungsstellung und Betätigungsstellung;
- Fig. 9a bis 9c: die Kugelstange mit einer Sperrvorrichtung für die Hülse.

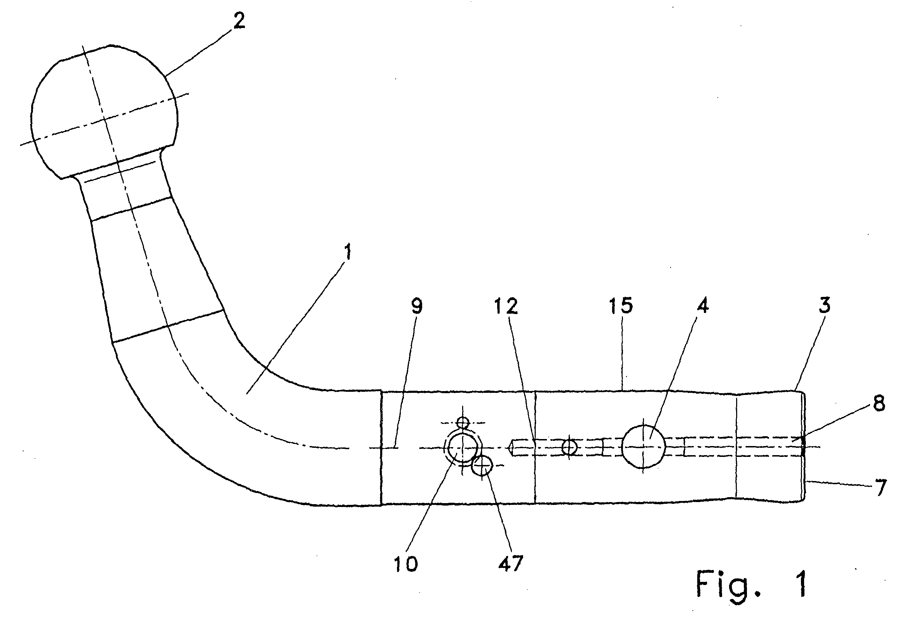

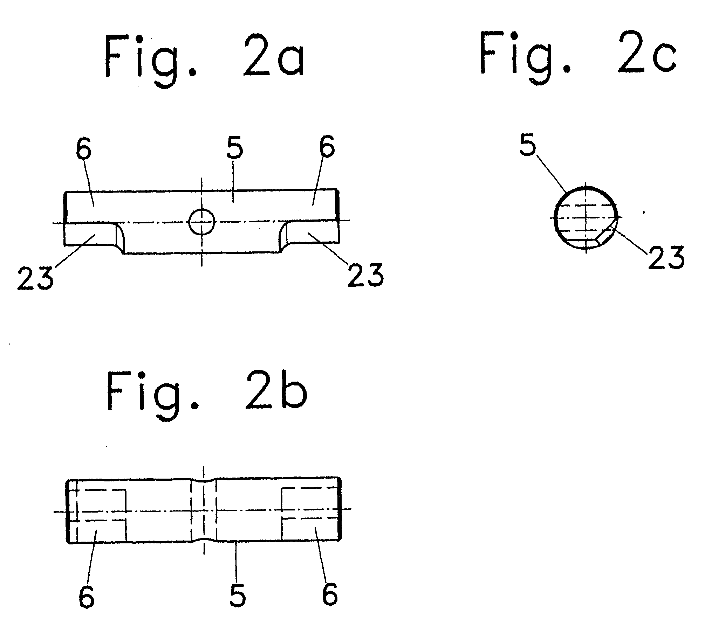

Eine in Figur 1 dargestellte Kugelstange 1 besitzt an einem Ende einen Kugelkopf 2 und an dem gegenüberliegenden Ende einen konvex geformten Stützbereich 3, der die Form eines Kugelausschnitts besitzt. Des weiteren ist die Kugelstange 1 mit einer ersten Bohrung 4 zur Aufnahme des in den Figuren 2 a bis 2 c dargestellten Verriegelungsbolzens 5 versehen. Der Verriegelungsbolzen 5 steht in einer in die Kugelstange 1 eingeschobenen Position mit seinen beiden Endzapfen 6 radial über den Außenumfang der Kugelstange 1 vor. Der Verriegelungsbolzen 5 dient zur Verriegelung der Kugelstange 1 in einem weiter unten erläuterten Gehäuse.

Die Kugelstange 1 weist des weiteren eine von ihrer Stirnseite 7 ausgehende, im Durchmesser gestufte Sackbohrung 8 auf, die koaxial zur Längsachse 9 eines im wesentlichen zylindrischen Endabschnitts der Kugelstange 1 verläuft. Diese Bohrung 8 dient zur Aufnahme einer Sperrvorrichtung für die Hülse, die weiter unten näher erläutert wird.

Außerdem ist in der Kugelstange 1 noch eine weitere Durchgangsbohrung 10 vorhanden, die zur Aufnahme der Drehachse eines Handrades dient, auf das weiter unten näher eingegangen wird.

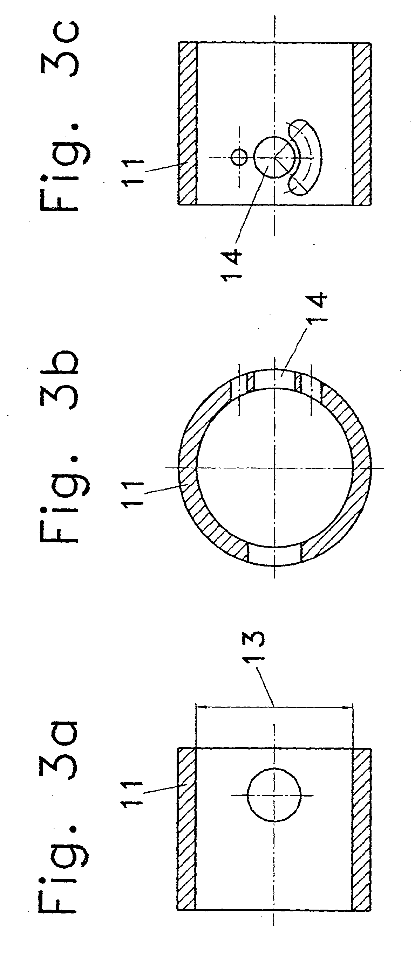

Die Figuren 3 a bis 3 c zeigen einen Ring 11, der im Bereich der Durchgangsbohrung 10 in der Kugelstange 1 (vergleiche Figur 1) auf den zylindrischen Abschnitt der Kugelstange 1 aufgeschoben ist und zu diesem Zweck einen dem Außendurchmesser 12 der Kugelstange 1 entsprechenden Innendurchmesser 13 besitzt. Der Ring 11 weist eine Bohrung 14 auf, die mit der Bohrung 10 in der Kugelstange 1 korrespondiert und ebenfalls zur Aufnahme der Drehachse des Handrades dient. Die Hauptfunktion des Ringes 11 besteht darin, eine Schraubenfeder einseitig abzustützen, die über den Außenmantel 15' der Kugelstange 1 nach Montage des Rings 11 aufgeschoben wird.

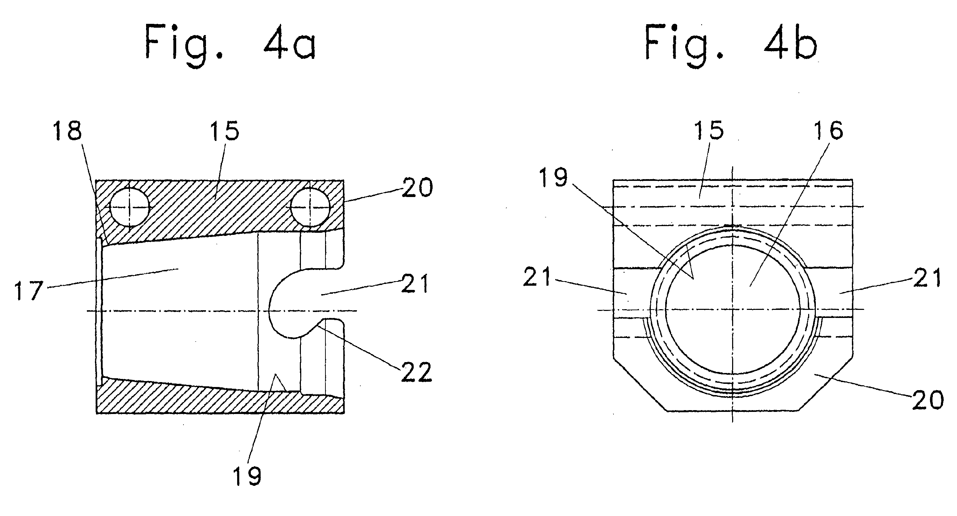

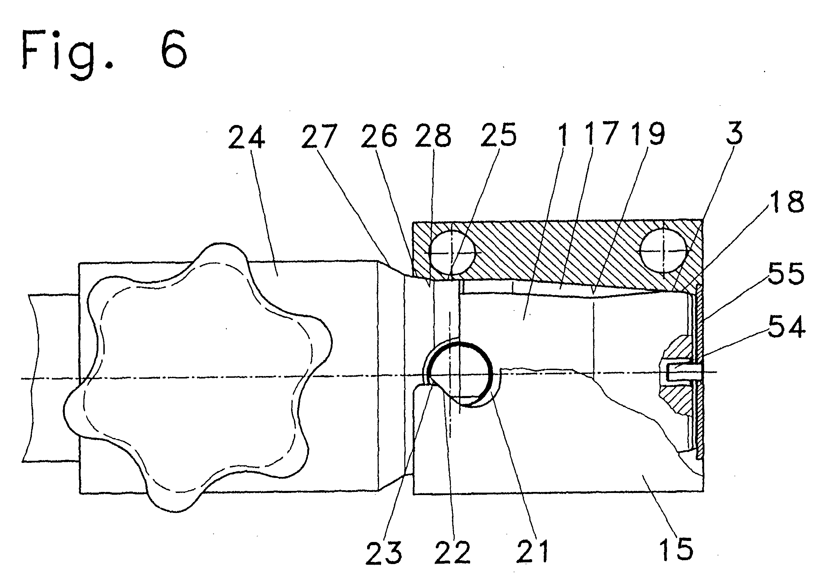

Die Figuren 4a und 4b zeigen ein Gehäuse 15 in dessen Öffnung 16 das mit der kugelförmigen Stützfläche 3 versehene Ende der Kugelstange 1 einschiebbar ist. Aufgrund des Verriegelungsbolzens 5 ist ein Einführen der Kugelstange 1 in das Gehäuse 15 nur möglich, wenn sich die Längsachse 9 der Kugelstange 1 und die Längsachse des Gehäuses 15 schneiden. Ein Aufnahmebereich 18 an dem der Öffnung 16 abgewandten Ende eines Innenraums 17 in dem Gehäuse 15 besitzt die Form eines konkaven Kugelausschnitts, der an die Geometrie des Stützbereichs 3 am Ende der Kugelstange 1 angepaßt ist. Figur 6 zeigt die Kugelstange 1 in der in das Gehäuse 15 eingesetzten und darin verriegelten Position. Wiederum aus den Figuren 4a und 4b läßt sich entnehmen, daß der Innenmantel 19 des Gehäuses 15 mit zwei von einer Stirnseite 20 ausgehenden Aussparungen 21 versehen ist. Die sich gegenüberliegenden Aussparungen 21 weisen jeweils eine rampenförmige Anlagefläche 22 auf, die mit einer ebenfalls rampenförmigen Kontaktfläche 23 an jedem Zapfen 6 des Verriegelungsbolzens 5 (vergleiche Figuren 2a bis 2c) zusammenwirkt. Figur 6 zeigt, wie die Kontaktfläche 23 des Verriegelungsbolzens 5 an der Anlagefläche 22 der Aussparung 21 in der Verriegelungsposition der Kugelstange 1 anliegt.

Diese Verriegelungsposition wird durch eine Hülse 24 gesichert, die axial verschiebbar auf der Kugelstange 1 gelagert ist und mit Hilfe einer nicht abgebildeten und sich an dem Ring 11 abstützenden Schraubenfeder in Richtung auf das Gehäuse 15 vorgespannt ist. Die Hülse 24 weist eine zylindrischen Abschnitt 25 und einen sich daran anschließenden und im Durchmesser erweiternden ersten konischen Mantelabschnitt 26 und einen zweiten konischen Mantelabschnitt 27 auf. Der konische Mantelabschnitt 26 steht mit einem sich von der Öffnung 16 in dem Gehäuse 15 erstreckenden angepaßten konischen Mantelabschnitt 28 des Gehäuses 15 in Kontakt. Über diese Mantelabschnitte 26 und 28 werden die Radialkräfte im Bereich der Hülse 24 in erster Linie in das Gehäuse 15 eingeleitet.

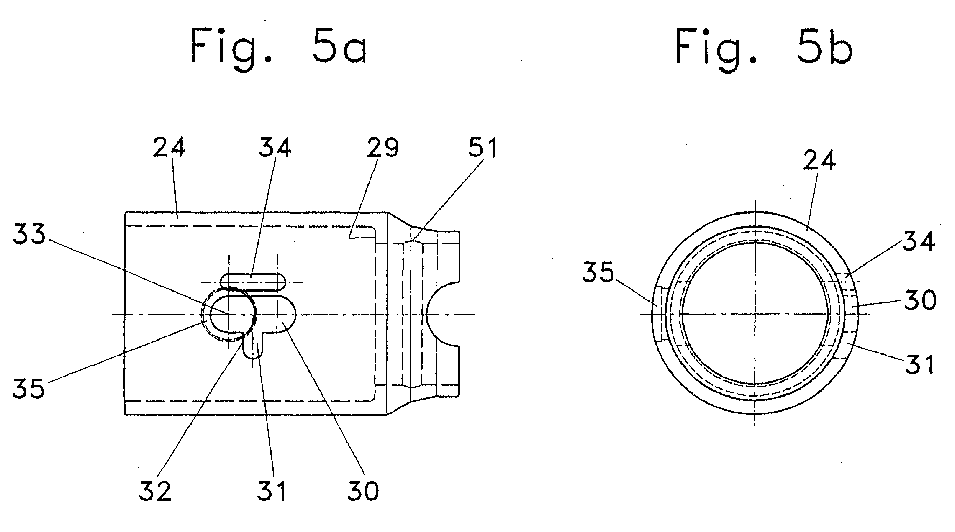

Wie sich aus den Figuren 5a und 5b ergibt, weist die Hülse 24 eine innenliegende Ringschulter 29 auf, die zur Abstützung der sich im Innern der Hülse befindlichen und nicht dargestellten Schraubenfeder dient. Die Hülse 24 weist des weiteren ein Langloch 30 auf, durch das die Drehachse eines in der Kugelstange 1 gelagerten Handrades führbar ist. Das Langloch 30 weist eine im rechten Winkel hierzu verlaufende Nut 31 auf, in die ein an dem Handrad befestigter Mitnehmer eingreift. Infolge einer Drehung des Handrades im Uhrzeigersinn wird die Hülse 24 durch Anlage des Mitnehmers an der in Figur 5a links befindlichen Wandung 32 der Nut 31 nach links, das heißt, in die Entriegelungsstellung bewegt. Dabei vollführt der Mitnehmer eine Kreisbewegung um die Drehachse 33 aus, so daß an der Wandung 32 eine Gleitbewegung relativ zu dem Mitnehmer auftritt. Des weiteren besitzt die Hülse 24 noch ein weiteres Langloch 34, das oberhalb des Langlochs 33 angeordnet ist und den Durchtritt eines in der Kugelstange 1 befestigten Stiftes, dessen Funktion später erläutert wird, erlaubt. Auf der den Langlöchern 30 und 34 gegenüberliegenden Seite der Hülse 24 besitzt diese eine Bohrung 35.

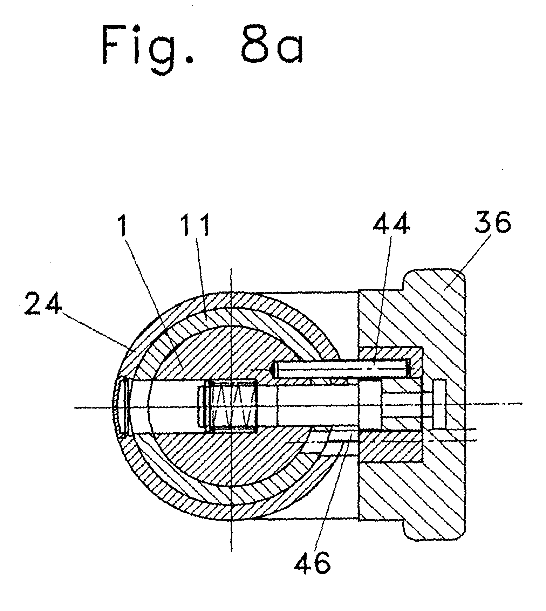

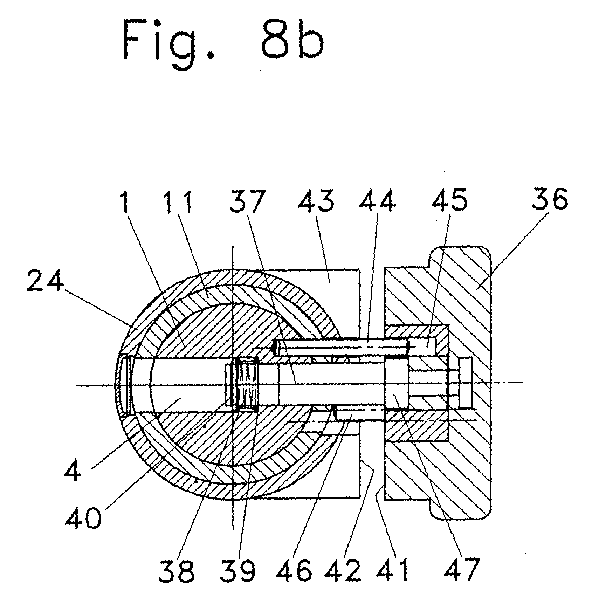

Die Funktion des Verstellmechanismus der Hülse 24 läßt sich sehr anschaulich den Figuren 8a und 8b entnehmen, in denen das Handrad 36 in einer Sicherungsstellung (Fig. 8a) bzw. in einer entsicherten, das heißt, radial von der Hülse 24 abgezogenen Position (Fig. 8b) dargestellt ist. Das Handrad 36 ist fest mit seiner Drehachse 37, die innerhalb der Bohrung 4 an der Kugelstange 1 gelagert ist, verbunden. Eine Feder 38, die sich einerseits an einer Ringschulter 39 der Bohrung 4 und andererseits an einem mit der Achse 37 verbundenen Sicherungsring 40 abstützt zieht das Handrad 36 mit seiner Stirnfläche 41 an eine Stirnfläche 42 eines Ausgleichskörpers 43, der lediglich aus ästhetischen Gründen zwischen dem Handrad 36 und der Hülse 24 angeordnet und mit letzterer verbunden ist.

In der in Figur 8a dargestellten Sicherungsposition greift der in eine Bohrung in der Kugelstange 1 eingepreßte Sicherungsstift 44 in eine Sackbohrung 45 in dem Handrad 36. Des weiteren greift der Mitnehmer 46 in eine Bohrung 47 (vergleiche Figur 1) in der Kugelstange 1 bzw. dem Ring 11. Eine Drehbewegung des Handrades 36 und ein unbeabsichtigtes Herausschieben der Hülse 24 aus dem Gehäuse 15 ist somit nicht möglich.

Erst in der in Figur 8b gezeigten entsicherten Stellung des Handrades 36 kann dieses im Uhrzeigersinn gedreht werden, wodurch der Mitnehmer 46 die Hülse 24 unter ständiger Anlage an der Wandung 32 der Nut 31 des Langlochs 30 eine Axialkraft auf die Hülse 24 ausübt. Erst in dieser abgezogenen Stellung des Handrades 36 ist auch die zweite formschlüssige Sicherung in Form des in die Bohrung 45 eingreifenden Sicherungsstifts 44 aufgehoben. Der Sicherungsstift 44 bewegt sich dabei in einem bogenförmigen Langloch 47 in dem Handrad 36.

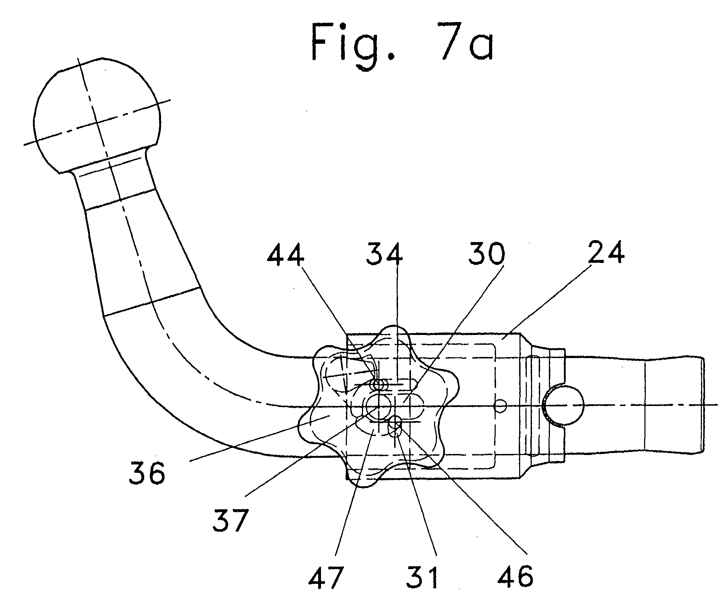

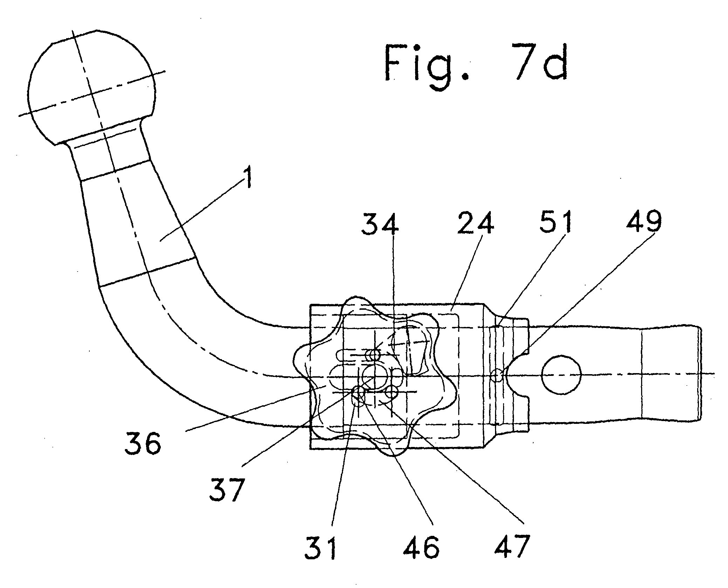

Den Figuren 7a bis 7d läßt sich entnehmen, wie die Hülse von der Verriegelungsstellung (Figur 7a) in die Freigabestellung (Fig. 7d) überführt wird. Dabei ist aus Gründen der Übersichtlichkeit das Gehäuse 15 in den Figuren 7a bis 7d nicht dargestellt.

Figur 7a zeigt eine Position der Hülse 24 und des Handrades 36 in der sich die Hülse 24 in ihrer rechten Endposition befindet. Der Sicherungsstift 44 befindet sich am linken Rand des Langlochs 34 in der Hülse 24, wohingegen sich der Mitnehmer 46 in der oberen Totstellung innerhalb der Nut 31 des Langlochs 30 befindet. Außerdem befindet sich der Mitnehmer 46 am oberen rechten Rand der bogenförmigen Nut 47 innerhalb des Handrades 36. Die Achse 37 des Handrades 36 befindet sich am linken Rand des Langlochs 30.

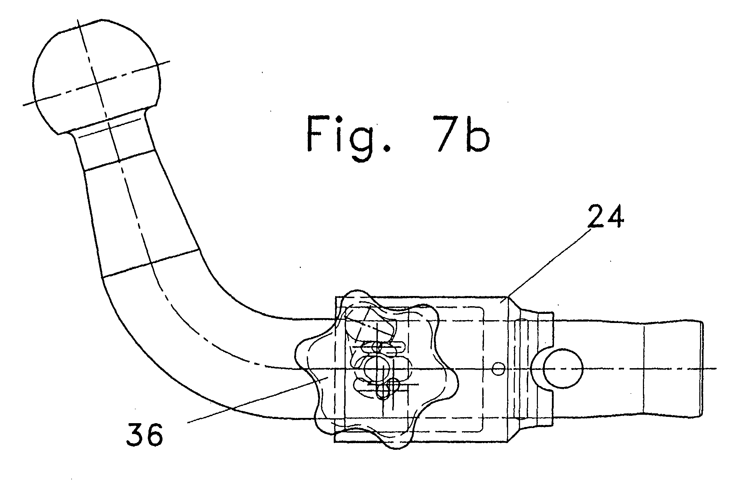

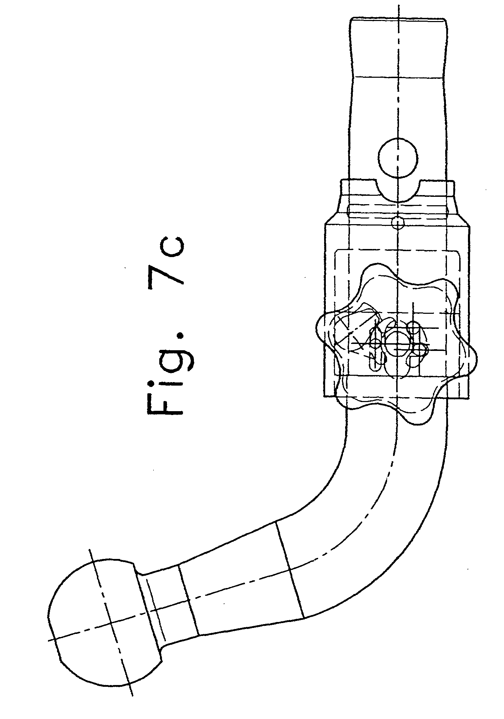

Während Figur 7b die Stellung der Hülse 24 und des Handrades 36 nach dessen Verdrehung um 30 Grad wiedergibt, zeigt Figur 7c die Verhältnisse nach einem Drehwinkel von 60 Grad.

Nach einem Drehwinkel von etwas über 90 Grad ist die linke Endstellung der Hülse 24 erreicht (vergleiche Figur 7d). Die Achse 37 des Handrades 36 befindet sich nunmehr am rechten Rand des Langlochs 30 in der Hülse. Der Mitnehmer 46 befindet sich gleichfalls am linken oberen Rand des bogenförmigen Langlochs 47, sowie erneut in der oberen Totstellung innerhalb der Nut 31 des Langlochs 30.

Da der zwischen der Kugelstange 1 und dem Gehäuse 15 befindliche Ringraum nunmehr wiederum frei ist, kann der Verriegelungszapfen 5 durch entsprechende Schrägstellung der Kugelstange 1 von der rampenförmigen Kontaktfläche 23 an der Aussparung 21 abgehoben werden, wodurch ein Entfernen der Kugelstange 1 in eine Richtung leicht schräg noch oben möglich wird.

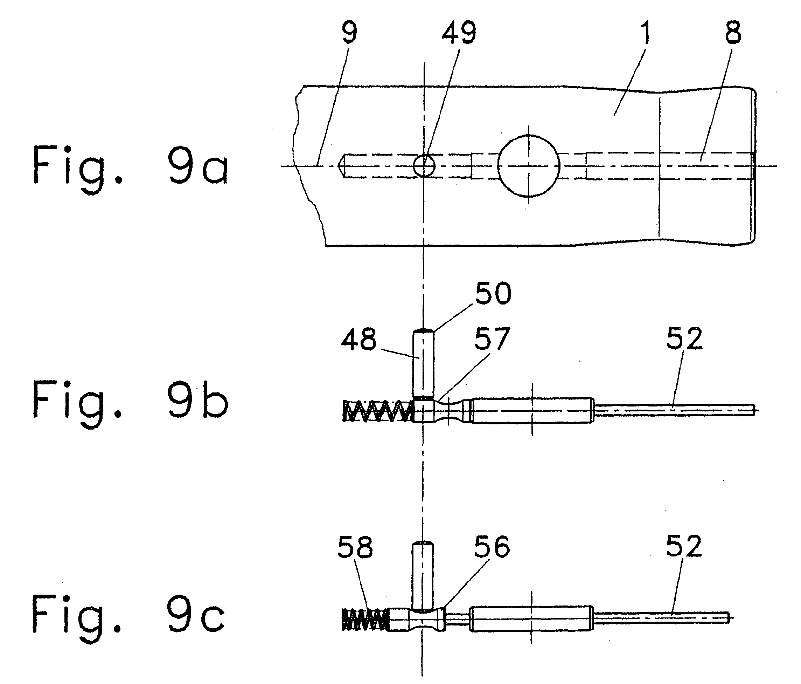

Um zu verhindern, daß das Handrad 36 durch die Federspannung nach einer Entfernung der Kugelstange 1 aus dem Gehäuse 15 wieder in die in Figur 7a gezeigte Verriegelungsposition zurückspringt, ist die Hülse 24 in der in Figur 7d gezeigten Entriegelungsstellung mittels einer in den Figuren 9a bis 9c gezeigten Sperrvorrichtung arretierbar. Die Arretierung der Hülse 24 erfolgt mit Hilfe eines stiftförmigen Sperrglieds 48, das innerhalb der rechtwinklig zu der Bohrung 8 verlaufenden Bohrung 49 verschiebbar gelagert ist. Das Sperrglied 48 greift mit seinem oberen Ende 50 in eine innerhalb der Hülse 24 umlaufende Ringnut 51 (vergleiche Figur 5a) ein, sobald die Ringnut 51 sich nach entsprechender Axialverschiebung der Hülse 24 oberhalb der Bohrung 49 befindet. Die Hülse 24 wird somit während der gesamten Aufbewahrungszeit der Kugelstange 1 außerhalb des Gehäuses 15 in der Entriegelungsstellung, d. h. vorgespannt, gehalten.

Wenn die Kugelstange 1 wieder in das Gehäuse 15 eingesetzt wird, stößt eine Stirnseite 52 einer Stößelstange 53, die axial verschiebbar innerhalb der Bohrung 8 in der Kugelstange 1 gelagert ist, gegen einen in Figur 6 dargestellten Auslösestift 54, der an einer den Innenraum 17 des Gehäuses 15 nach hinten begrenzenden Endplatte 55 befestigt ist. Die Verschiebung der Stößelstange 53 in die Bohrung 8 der Kugelstange 1 hinein bewirkt in gleichem Maße eine Axialverschiebung eines Umlenkelements in Form eines mit der Stößelstange 53 gekoppelten Stößels 56, dessen geneigt verlaufende Steuerfläche 57 dazu führt, daß das Sperrglied 48 sich in radiale Richtung auf die Mittelachse 9 zubewegen kann und sich dadurch aus der Ringnut 51 zurückzieht. Hierdurch wird die Hülse 24 entriegelt und schiebt sich selbsttätig in den Ringraum zwischen der Kugelstange 1 und dem Gehäuse 15 ein, sobald die Kugelstange 1 korrekt in axialer Richtung ausgerichtet ist. Sobald die Kugelstange 1 erneut aus dem Gehäuse 15 entfernt wird, schiebt eine auf den Stößel 56 wirkende Schraubenfeder 58 diesen und die Stößelstange 53 in Richtung aus der Bohrung 8 heraus, wodurch das Sperrglied 48 über die Steuerfläche 57 nach oben gleitet und dadurch wiederum in die Ringnut 51 in der Hülse 24 eingreifen kann, wodurch diese erneut in der Entriegelungsposition arretiert wird.

## Patentansprüche

1. Anhängekupplung mit einem an einen Fahrzeugträger angeschlossenen Gehäuse (15) und einer darin durch eine Öffnung (16) einsteckbaren und in einer koaxialen Position zu dem Gehäuse (15) verriegelbaren Kugelstange (1), wobei die Öffnung (16) und der Innenraum (17) des Gehäuses (15) in einem von der Öffnung (16) ausgehenden Abschnitt größere Querschnitte aufweisen als die entsprechenden Querschnitte der Kugelstange (1) und an dem Außenmantel (15') der Kugelstange (1) und/ oder an dem Innenmantel (19) des Gehäuses (15) mindestens ein radial vorstehendes Verriegelungselement angeordnet ist, wodurch die Kugelstange (1) in das und aus dem Gehäuse (15) nur dann ein- und ausführbar ist, wenn die Mittelachse (9) der Kugelstange (1) und die Mittelachse des Innenraums (17) des Gehäuses (15) sich schneiden, und wobei die in das Gehäuse (15) eingeführte Kugelstange (1) koaxial zum Innenraum (17) des Gehäuses ausrichtbar ist, wobei des weiteren das Verriegelungselement in mindestens eine Aussparung (21) im Außenmantel (15') der Kugelstange (1) und/ oder im Innenmantel (19) des Gehäuses (15) überführbar und damit in axialer Richtung relativ zu dem Gehäuse (15) festlegbar ist und ein durch die koaxiale Ausrichtung der Kugelstange (1) zu dessen Innenraum (17) des Gehäuses (15) in diesem erzeugbarer Ringraum, der sich in einem von der Öffnung (16) ausgehenden Abschnitt des Innenraums (17) erstreckt, durch eine auf der Kugelstange (1) verschiebbar gelagerte Hülse (24) ausfüllbar ist, **dadurch gekennzeichnet, daß** ein Stützbereich (3) am gehäuseseitigen Ende des Außenmantels (15') der Kugelstange (1) die Form eines konvexen Kugelabschnitts und ein damit korrespondierender Aufnahmebereich (18) an dem Innenmantel (19) des Gehäuses (15) die Form eines entsprechenden konkaven Kugelausschnitts aufweist und daß das Verriegelungselement eine rampenförmige Kontaktfläche (23) besitzt, die in der Verriegelungsstellung an einer entsprechend rampenförmigen Anlagefläche (22) an der Aussparung (21) in dem Innenmantel (19) des Gehäuses (15) und/ oder in dem Außenmantel (15') der Kugelstange (1) anliegt.

2. Anhängekupplung nach Anspruch 1, **dadurch gekennzeichnet, daß** die Hülse (24), ausgehend von ihrem in die Öffnung (16) des Gehäuses (15) einschiebbaren Ende, zunächst einen zylindrischen Mantelabschnitt (25) und daran anschließend einen sich im Durchmesser erweiternden konischen Mantelabschnitt (26) aufweist, wobei der konische Mantelabschnitt (26) mit einem sich von der Ebene der Öffnung (16) erstreckenden angepaßt konischen Mantelabschnitt (28) des Gehäuses (15) in Kontakt steht.

3. Anhängekupplung nach Anspruch 1 oder 2, **dadurch gekennzeichnet, daß** die Hülse (24) mittels eines in der Kugelstange (1) drehbar gelagerten Handrades (36) verschiebbar ist, wobei das Handrad (36) oder die Hülse (24) mit einem radial vorstehenden Mitnehmer (46) versehen ist, der in eine Aussparung in der Hülse (24) oder in dem Handrad (36) eingreift und mit einer Wandung der Aussparung in Kontakt bringbar ist.

4. Anhängekupplung nach Anspruch 3, **dadurch gekennzeichnet, daß** die Hülse (24) mit einem Langloch (30) versehen ist, durch das die Achse (37) des Handrades (36) geführt ist.

5. Anhängekupplung nach Anspruch 3 oder 4, **dadurch gekennzeichnet, daß** das Handrad (36) nur in einer in Richtung seiner Achse (37) von der Kugelstange (1) abgezogenen Stellung drehbar ist.

6. Anhängekupplung nach Anspruch 5, **dadurch gekennzeichnet, daß** der an dem Handrad (36) befestigte Mitnehmer (46) in einer Sicherungsstellung des Handrades (36) in eine angepaßte Sicherungsbohrung in der Kugelstange (1) eingreift.

7. Anhängekupplung nach einem der Ansprüche 3 bis 6, **dadurch gekennzeichnet, daß** das Handrad (36) mittels einer an seiner Achse (37) angreifenden Feder (38) in Richtung auf die Sicherungsstellung vorgespannt ist.

8. Anhängekupplung nach einem der Ansprüche 3 bis 7, **dadurch gekennzeichnet, daß** die Hülse (24) in ihrer Entriegelungsstellung mittels einer Sperrvorrichtung arretierbar ist, die eine selbsttätige Entarretierung bewirkt, sobald die Kugelstange 1 vollständig in axialer Richtung in das Gehäuse (15) eingesteckt ist.

9. Anhängekupplung nach Anspruch 8, **dadurch gekennzeichnet, daß** die Sperrvorrichtung eine in axialer Richtung der Kugelstange (1) verschiebbare Stößelstange (53) und ein daran gekoppeltes Umlenkglied aufweist, daß die axiale Bewegung der Stößelstange (53) in eine radiale Bewegung eines mit dem Umlenkglied gekoppelten Sperrglieds (48) für die Hülse (24) umwandelt, wobei die Stößelstange (53) mittels einer Feder (58) in die Sperrstellung vorgespannt ist und von einem Auslöseelement in dem Gehäuse (15) in die Entriegelungsstellung überführbar ist.

10. Anhängekupplung nach Anspruch 9, **dadurch gekennzeichnet, daß** das Umlenkglied ein Stößel (56) ist, dessen geneigt verlaufende Steuerfläche (57) das stiftförmige Sperrglied (48) abstützt, das in der Entriegelungsstellung in eine Vertiefung in der inneren Mantelfläche der Hülse (24) eingreift.
